(19) Europäisches Patentamt
European Patent Office
Office européen des brevets

(11) EP 4 803 952 A1

(12) # EUROPEAN PATENT APPLICATION

(43) Date of publication:
**09.09.2026 Bulletin 2026/37**

(21) Application number: **26154982.8**

(22) Date of filing: **29.01.2026**

(51) International Patent Classification (IPC):
***G02B 27/01*** *(2006.01)* *G02B 3/14* *(2006.01)*
*G02C 7/08* *(2006.01)*

(52) Cooperative Patent Classification (CPC):
**G02B 27/0172; G02C 7/086;** G02B 3/14; G02B 2027/0178; G02C 7/083

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.03.2025 US 202519068513**

(71) Applicant: **Bytedance Technology Ltd.**
**KY1 - 1205 Grand Cayman Cayman Islands (KY)**

(72) Inventors:
- **Yang, Bin**
  **Los Angeles, CA, 90066 (US)**
- **Chen, Xiaoran**
  **Los Angeles, CA, 90066 (US)**

(74) Representative: **Grünecker Patent- und Rechtsanwälte PartG mbB**
**Leopoldstraße 4**
**80802 München (DE)**

(54) **HEAD-MOUNTED DEVICE WITH ADJUSTABLE VISION CORRECTION**

(57) Examples are disclosed that relate to a head-mounted device (HMD) capable of providing adjustable vision correction. In one example, an HMD comprises an image source configured to generate image light, display optics configured to receive the image light and direct the image light toward an eye of a user, and a vision correction module positioned intermediate the display optics and the eye of the user. The vision correction module is configured to receive the image light output from display optics. The vision correction module comprises a first cylindrical lens, a second cylindrical lens aligned with the first cylindrical lens along a propagation axis, and an adjustment mechanism. The adjustment mechanism is configured to change a rotational orientation of the first cylindrical lens relative to the second cylindrical lens about the propagation axis to direct the image light to a designated location in the eye of the user.

800
804
818
820
816
812
810
814
COMPUTING SYSTEM 808

FIG. 8B

EP 4 803 952 A1

## Description

### BACKGROUND

Virtual reality (VR) and augmented reality (AR) technologies have revolutionized the way users interact with digital content, enabling immersive experiences in gaming, entertainment, training, healthcare, and various other industries. These technologies rely on head-mounted devices (HMDs) that position high-resolution screens close to the user's eyes to create a virtual or augmented environment. While VR and AR devices have gained increased adoption recently, for individuals requiring vision correction-such as those who wear prescription glasses or contact lenses-such VR and AR devices can be uncomfortable and difficult to use.

Users with refractive errors in vision, such as myopia, hyperopia, astigmatism, or presbyopia, often find it difficult to comfortably use VR and AR devices. These challenges arise for several reasons. First, the close-fitting design of HMDs can cause discomfort or interference when wearing prescription glasses, as the frame of the glasses may press against the user's face, or the lenses may fog due to heat generated by the device. Additionally, the limited space within many HMDs can restrict the size or shape of glasses that can be accommodated, forcing users to remove their glasses and resulting in a suboptimal or blurry visual experience.

Second, contact lenses, while often used as an alternative to glasses, may also present issues. Extended use of VR and AR devices can lead to eye strain or dryness, exacerbating discomfort for users who rely on contact lenses. Furthermore, VR and AR applications that involve frequent movement or prolonged usage can make it impractical for some users to wear contact lenses, limiting accessibility to these technologies.

Another challenge arises from the inherent optical design of VR and AR displays. The visual content displayed by HMDs typically requires precise focusing, and many devices rely on fixed focal distances or limited diopter adjustment ranges, which may not adequately address the varying vision correction needs of all users. This can lead to eyestrain, headaches, or a compromised immersive experience, particularly for users with complex or high-prescription vision needs.

Furthermore, the lack of seamless integration of vision correction solutions into VR and AR devices poses a barrier to widespread adoption. Current solutions, such as prescription lens inserts or external adapters, may be cumbersome to install, expensive, or incompatible across different device models. These workarounds may also fail to fully resolve issues related to field of view distortion or misalignment with the user's prescription needs.

Thus, there is a need for improved methods and devices to address the challenges faced by users requiring vision correction when using VR and AR technologies. Overcoming these challenges allows for making VR and AR experiences more inclusive, accessible, and comfortable for a broader range of users.

### SUMMARY

Examples are disclosed that relate to a head-mounted device capable of providing adjustable vision correction. In one example, a head-mounted device comprises an image source configured to generate image light, display optics configured to receive the image light output from the image source and direct the image light toward an eye of a user, and a vision correction module positioned intermediate the display optics and the eye of the user. The vision correction module is configured to receive the image light output from display optics. The vision correction module comprises a first cylindrical lens, a second cylindrical lens aligned with the first cylindrical lens along a propagation axis, and an adjustment mechanism. The adjustment mechanism is configured to change a rotational orientation of the first cylindrical lens relative to the second cylindrical lens about the propagation axis to direct the image light to a designated location in the eye of the user.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1A shows a virtual reality (VR) head-mounted device (HMD) capable of providing adjustable vision correction, according to one example of the present disclosure.

FIG. 1B schematically shows the VR HMD shown in FIG. 1A.

FIG. 2 schematically shows first and second cylindrical lenses of a vision correction module of a display subsystem of an HMD, wherein the first and second cylindrical lenses are positioned in respective first and second reference

positions about a propagation axis.

FIG. 3 schematically shows the first and second cylindrical lenses of FIG. 2 adjusted relative to the respective first and second reference positions to provide vision correction in order to direct image light to a designated location in an eye of a user.

FIG. 4 schematically shows a spherical optical element in the form of a liquid lens that can be implemented in a display subsystem, according to one example of the present disclosure.

FIG. 5 schematically shows a spherical optical element in the form of a liquid crystal lens that can be implemented in a display subsystem of an HMD, according to one example of the present disclosure.

FIG. 6 schematically shows a spherical optical element in the form of an Alvarez lens that can be implemented in a display subsystem of an HMD, according to one example of the present disclosure.

FIG. 7 schematically shows an adjustment mechanism for adjusting lenses of a vision correction module of a display subsystem, according to one example of the present disclosure.

FIG. 8A shows an augmented reality (AR) HMD capable of providing adjustable vision correction, according to one example of the present disclosure.

FIG. 8B schematically the AR HMD shown in FIG. 8A.

FIG. 9 is a flowchart of a method for controlling an HMD to provide adjustable vision correction for a user, according to one example of the present disclosure.

FIG. 10 schematically shows an example computing system representative of the VR HMD shown in FIGS. 1A and 1B and the AR HMD shown in FIGS. 8A and 8B.

## DETAILED DESCRIPTION

Virtual reality (VR) and augmented reality (AR) technologies rely on head-mounted devices (HMDs) that position high-resolution screens close to the user's eyes to create a virtual or augmented environment. While VR and AR devices have gained widespread adoption, their usability and comfort for individuals requiring vision correction-such as those who wear prescription glasses or contact lenses-remain significant challenges. Accordingly, to address such challenges, examples are disclosed that relate to a head-mounted device capable of providing adjustable vision correction to correct different types and varying degrees of vision deficiencies of different users.

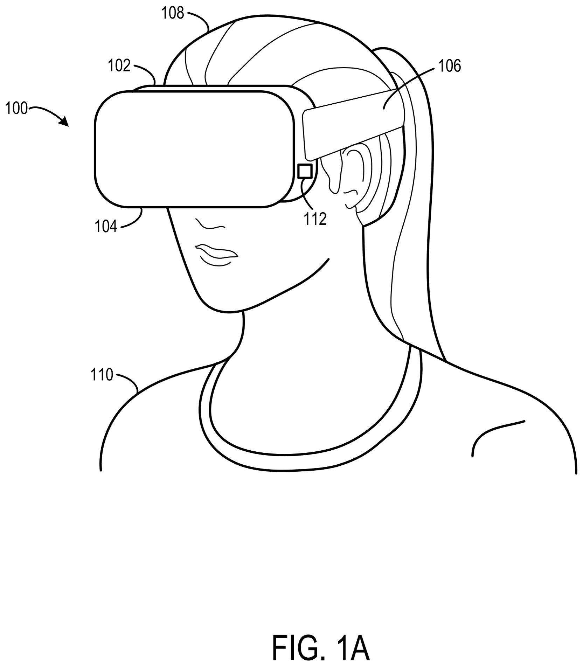

FIG. 1A shows a VR HMD 100 capable of providing adjustable vision correction, according to one example of the present disclosure. The VR HMD 100 comprises a frame 102 and a display subsystem 104 that is operatively connected to the frame 102. The VR HMD 100 further comprises a strap 106 operatively connected to the frame 102. The strap 106 is configured to wrap around a head 108 of a user 110 to position the display subsystem 104 close to eyes of the user 110, such that the display subsystem 104 can display virtual content to the eyes of the user. The VR HMD 100 comprises a computing system 112 that is configured to control the display subsystem 104 to provide vision correction that is adjustable to compensate for the particular vision deficiencies of the eyes of the user 110. In particular, the display subsystem 104 is configured to generate image light corresponding to virtual content and manipulate the image light to focus on retinas in the eyes of the user 110 in a manner that corrects for vision deficiencies of the eyes of the user 110.

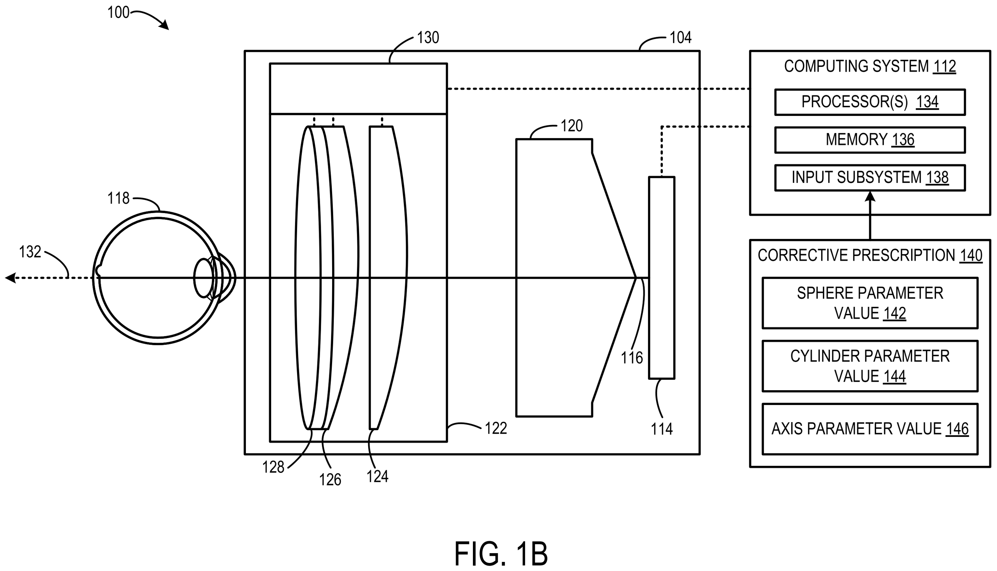

FIG. 1B schematically shows the VR HMD 100 shown in FIG. 1A, and more particularly, the display subsystem 104. The display subsystem 104 comprises an image source 114 that is configured to generate image light 116 that forms an image / video that is delivered by the display subsystem 104 to an eye 118 of the user 110. The image source 114 can take various forms. In one example, the image source 114 is a micro light emitting diode (MicroLED) display. In another example, the image source 114 is a liquid crystal on silicon (LCoS) display. In yet another example, the image source 114 is a digital light processing (DLP) display. In yet another example, the image source 114 is a liquid crystal display (LCD). In yet another example, the image source 114 is a micro organic light emitting diode (MircoOLED) display. In other examples, the image source 114 may be another type of display.

The display subsystem 104 comprises display optics 120 that are configured to receive the image light 116 output from the image source 114 and direct the image light toward the eye 118 of the user 110. The display optics 120 can include various optical components that manipulate the image light 116 to a suitable form to be presented to the eye 118 of the user 110. Such optical components can include waveguides, lenses (e.g., Fresnel lenses, pancake optics), diffusers, and/or other optical components that collectively magnify, focus, diffuse, and/or otherwise direct the image light 116 to the eye 118 of the user 110.

The display subsystem 104 comprises a vision correction module 122 that is positioned intermediate the display optics 120 and the eye 118 of the user 110. The vision correction module 122 is configured to receive the image light 116 output from display optics 120 and manipulate the image light 116 to compensate vision deficiencies in the eye 118 of the user 110. More particularly, the vision correction module 122 is adjustable to correct different types and varying degrees of vision deficiencies of different users.

The vision correction module 122 comprises a first cylindrical lens 124, a second cylindrical lens 126 aligned with the first cylindrical lens 124 along a propagation axis 132 along which the image light 116 is directed to the eye 118 of the

user 110.

The first cylindrical lens 124 and the second cylindrical lens 126 are collectively configured to correct astigmatism in the eye 118 of the user 110 by compensating for the uneven curvature of a cornea or lens in the eye 118, which causes light to focus on different points along different axes. In a normal eye without astigmatism, the cornea and lens are spherical, meaning they have the same curvature in all directions. This allows light rays to focus on a single point on a retina of the eye. In an eye with astigmatism, the cornea or lens has an oval shape with different curvatures along vertical and horizontal axes. This uneven curvature causes light to focus on separate points (or lines) instead of one, leading to blurry or distorted vision at certain distances or orientations.

To correct astigmatism in an eye, each of the first cylindrical lens 124 and the second cylindrical lens 126 has curvature in one direction and no curvature in the perpendicular direction. This allows each cylindrical lens to focus or disperse light along a single axis while leaving the other axis unchanged. Each of the first cylindrical lens 124 and the second cylindrical lens 126 are individually rotatable around the propagation axis 132 to adjust a combined power of the first cylindrical lens 124 and the second cylindrical lens 126 to match the power of a particular astigmatism that is being corrected by the vision correction module 122. More particularly, the combined power of the first cylindrical lens 124 and the second cylindrical lens 126 is tuned based at least on a difference between the rotation angles of the first cylindrical lens 124 and the second cylindrical lens 126 relative to respective refence positions. Further, the mean value of the rotation angles of the first cylindrical lens 124 and the second cylindrical lens 126 provide a rotation angle that is adjustable to align with an astigmatic axis in the eye. The astigmatic axis refers to the orientation (measured in degrees) of a principal meridian (e.g., steepest (most curved) meridian, flattest (least curved) meridian) that requires cylindrical correction due to astigmatism.

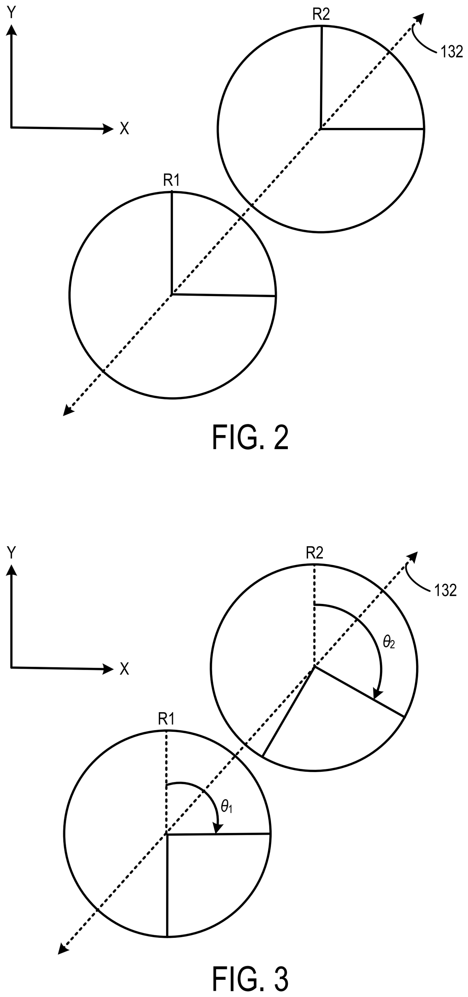

FIGS. 2-3 schematically show the first cylindrical lens 124 and the second cylindrical lens 126 with different example orientations relative to the propagation axis 132. In FIG. 2, the first cylindrical lens 124 is positioned in a first reference position (R1) and the second cylindrical lens 126 is positioned in a second reference position (R2). In one example, the first cylindrical lens 124 and the second cylindrical lens 126 are configured such that when the first cylindrical lens 124 is positioned in the first reference position (R1) and the second cylindrical lens 126 is positioned in the second reference position (R2), the vision correction module 122 provides no astigmatism correction, but does provide a spherical correction that optionally can be compensated for by a spherical power adjustment via the spherical optical element 128. For example, this orientation of the first and second cylindrical lenses 124, 126 can be set as a factory default setting, so that users without the need for vision correction can use the VD HMD 100 "right out of the box" without requiring additional setup or tuning of the vision correction module 122.

In FIG. 3, the first cylindrical lens 124 is rotated in the X-Y plane about the propagation axis 132 by a first rotation angle ($\theta_1$). The second cylindrical lens is rotated in the X-Y plane about the propagation axis by a second rotation angle ($\theta_2$). The mean value ( $\frac{\theta 1 * \theta 2}{2}$ ) is equal to the rotation angle that aligns with astigmatism of a particular user. Further, the difference in rotation angles ($\theta_1$-$\theta_2$) is equal the power of astigmatism of a particular user. The first cylindrical lens 124 and the second cylindrical lens 126 can be rotated in the X-Y plane about the propagation axis 132 to any suitable respective rotation angles in order to match the power and position of astigmatism of a particular user. By using the first cylindrical lens 124 and the second cylindrical lens 126 to bend the image light 116 differently along the axis affected by astigmatism, light rays are redirected to focus on the same designated location in the eye (e.g., on the retina), rather than forming separate focal lines, which eliminates blur or distortion caused by astigmatism.

Returning to FIG. 1B, the vision correction module 122 further comprises a spherical optical element 128 that is aligned with the first cylindrical lens 124 and the second cylindrical lens 126 along the propagation axis 132. In the illustrated example, the spherical optical element 128 is coupled to the second cylindrical lens 126, such that the spherical optical element 128 rotates with the second cylindrical lens 126. In other examples, the spherical optical element 128 is coupled to the first cylindrical lens 124. In still other examples, the spherical optical element 128 is spaced apart from the first cylindrical lens 124 and the second cylindrical lens 126 while still being aligned along the propagation axis 132. In some examples, the order of the spherical optical element 128, the first cylindrical lens 124, and the second cylindrical lens 126 can change within the vision correction module 122. In some examples, the spherical optical element 128 is positioned closer to the display optics 120 than the first cylindrical lens 124 and the second cylindrical lens 126. Further, in some examples, the spherical optical element 128 can be coupled to, or formed integral with, the display optics 120. For example, the spherical optical element 128 / display optics 120 can take the form of a focus-tunable display lens. In another example, the spherical optical element 128 is configured to move along the propagation axis 132 (and/or the optical axis of the display subsystem 104) with respect to the display optics 120 to adjust a position at which a virtual image is displayed relative to the eye 118 of the user 110, which effectively adjusts the focal point of the image light 116. In such examples, the state of the spherical optical element 128 is adjusted based at least on adjusting the position of the spherical optical element 128 with respect to the display optics 120.

In the illustrated example, the spherical optical element 128 is configured to receive the image light 116 output from the second cylindrical lens 126 and adjust a focal point of the image light 116 to a designated location (e.g., a location

on the retina) on the eye 118 based on a state of the spherical optical element 128. In particular, the state of the spherical optical element 128 is tunable to adjust the focal point of the image light 116 across a suitable distance range. The spherical optical element 128 can be tuned to correct for myopia (nearsightedness) and/or presbyopia (farsightedness) by bending light rays to compensate for the eye's inability to focus light directly on the retina. Note that the spherical optical element 128 manipulates light in the same manner regardless of the orientation of the spherical optical element 128 relative to the propagation axis 132. As such, in implementations where the spherical optical element 128 is coupled to either of the first cylindrical lens 124 or the second cylindrical lens 126, the spherical optical element 128 can be rotated with one of the lenses and still operate in the same manner.

In myopia, the eyeball is too long, or the cornea is too curved. This causes light rays from distant objects to focus in front of the retina, making distant objects appear blurry. To correct for myopia, the state of the spherical optical element 128 can be adjusted to diverges light rays before they enter the eye, effectively "spreading out" the light. This shifts the focal point further back so that it falls directly on the retina. The state of the spherical optical element 128 can be adjusted based at least on the degree of myopia to precisely correct the refractive error of the eye.

In presbyopia, the lens of the eye has reduced flexibility, reducing its ability to focus on close objects. This causes light rays from near objects to focus behind the retina, making close objects appear blurry. To correct for presbyopia, the state of the spherical optical element 128 can be adjusted to converge light rays before they enter the eye, effectively "pulling" the focal point forward. This helps light focus directly on the retina for near objects. The state of the spherical optical element 128 can be adjusted based at least on the degree of presbyopia and the distance at which the person wants to focus (e.g., reading or computer work).

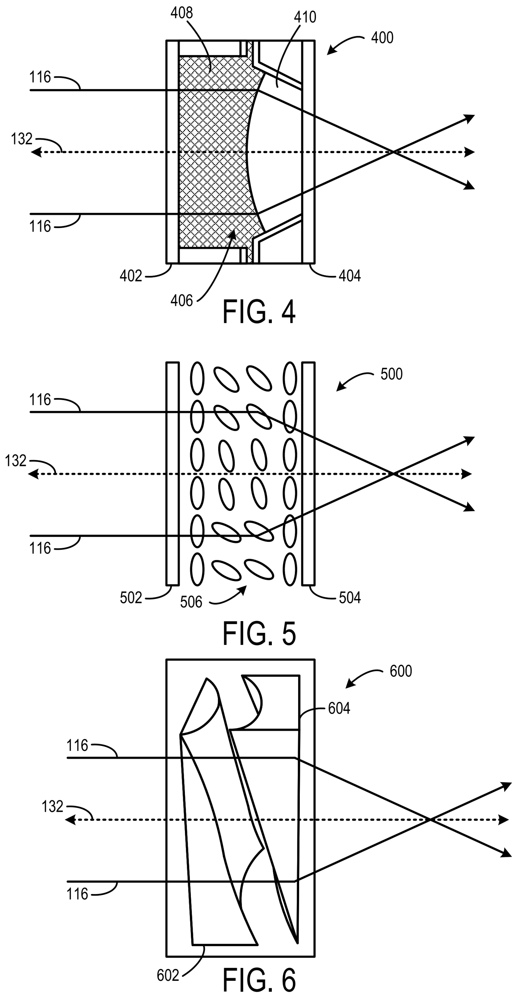

The spherical optical element 128 can take various forms in different implementations. FIGS. 4-6 show different forms of spherical optical elements that can be used in the vision correction module 122.

FIG. 4 schematically shows a spherical optical element in the form of a liquid lens 400, according to one example of the present disclosure. The liquid lens 400 comprises a first window 402 and a second window 404 that are spaced apart to form a cavity 406 that contains a first immiscible liquid 408 and a second immiscible liquid 410 with different refractive indices (e.g., water and oil). The interface between the first immiscible liquid 408 and the second immiscible liquid 410 forms a curved surface that acts as a lens. By applying a voltage to the liquid lens 400, the contact angle of the liquid interface between the first and second immiscible liquids changes, altering the curvature of the interface, and thus the focal length of light that passes through the liquid lens 400. In the illustrated example, the interface between the first immiscible liquid 408 and the second immiscible liquid 410 forms a concave interface that can be used to correct for presbyopia by converge light rays of image light 116 along the propagation axis 132 before they enter the eye. The state of the liquid lens 400 can be adjusted via the applied voltage to form a convex interface between the first immiscible liquid 408 and the second immiscible liquid 410 to correct for myopia. The state of the liquid lens 400 can be adjusted to adjust the focal point of the image light 116 to a suitable location to provide vision correction of a particular user.

In other examples, the liquid lens can include a flexible membrane filled with a liquid, and the shape of the membrane can be adjusted by applying mechanical pressure or varying the liquid volume to adjust the focal length.

FIG. 5 schematically shows a spherical optical element in the form of a liquid crystal lens 500, according to one example of the present disclosure. The liquid crystal lens 500 comprises a first glass substrate 502 and a second glass substrate 504. A plurality of liquid crystal molecules 506 are contained between the first glass substate 502 and the second glass substate 504. When an electric field (e.g., a voltage) is applied to the plurality of liquid crystal molecules 506, the orientation of the plurality of liquid crystal molecules 506 changes, modifying the optical properties of the liquid crystal lens 500. In the illustrated example, a voltage is applied to the liquid crystal lens 500 to cause the orientation of the plurality of liquid crystal molecules 506 to converge light rays of image light 116 along the propagation axis 132 before they enter the eye to correct for presbyopia. The state of the liquid crystal lens 500 can be adjusted by adjusting the voltage applied to the plurality of liquid crystal molecules 506 to adjust the focal point of the image light 116 to a suitable location to provide vision correction of a particular user.

In other examples, the spherical optical element 128 can take the form of a geometric phase lens (GPL). A GPL is a type of optical lens that manipulates the phase of light by controlling its polarization, using a phenomenon called the "geometric phase", which arises when light travels through a spatially varying anisotropic material, such as a specially patterned liquid crystal. When light travels through the GPL, a phase shift occurs that is dependent on the polarization state and the path taken by the light. The GPL is configured to adjust a focus of light by changing its polarization state as it passes through the lens. In one example, the state of the GPL can be adjusted to adjust the focal point of the image light by applying an electric field (e.g., a voltage) to the spatially varying anisotropic material of the GPL to adjust the way the spatially varying anisotropic material manipulates the polarization state of the image light.

FIG. 6 schematically shows a spherical optical element in the form of an Alvarez lens 600, according to one example of the present disclosure. The Alvarez lens 600 comprises a first plate 602 having a freeform (e.g., non-spherical) surface and a second plate 604 having a freeform (e.g., non-spherical) surface that mirrors the surface of the first plate 602. For example, the surfaces of the first and second plates 602, 604 can be shaped as polynomial functions such as a parabolic or cubic pattern. The first and second plates are configured to slide laterally relative to one another to adjust the

combined optical power of the Alvarez lens 600. The sliding of the first and second plates 602, 604 changes the overall refractive effect of the lens system, allowing it to dynamically adjust the focus or correct for optical aberrations. When the first and second plates 602, 604 are aligned symmetrically, the Alvarez lens 600 has neutral or minimal optical power. As the first and second plates 602, 604 plates slide apart, the curvature effect increases, altering the focus. The degree of sliding determines the amount of focusing or defocusing (i.e., optical power). This is done without physically changing the thickness or material properties of the Alvares lens 600. In the illustrated example, the first and second plates 602, 604 are aligned to converge light rays of image light 116 along the propagation axis 132 before they enter the eye to correct for presbyopia. In some examples, the Alvarez lens 600 can be adjusted via mechanical sliders or gears. In other examples, the Alvarez lens 600 can be adjusted via actuators or piezoelectric elements to provide precise, rapid adjustments.

In other examples, other forms of spherical optical elements can be employed in the vision correction module 122.

Returning to FIG. 1B, the first cylindrical lens 124, the second cylindrical lens 126, and the spherical optical element 128 can be adjusted to provide vision correction that can be defined by a series of mathematical equations. In particular, the curvature of a cylindrical lens in polar space is defined by the extended polynomial equation:

$$Z(r, \theta) = A * r^2 * cos^2(\theta - \theta_0)$$

where $r$ is the radius, and $\theta_0$ is the rotational angle of the cylindrical lens. $A$ is the coefficient of the extended polynomial equation, and is associated with the power of the cylindrical lens as defined by the equation:

$$P = A * (n-1)$$

where n is the refractive index of the cylindrical lens.

In the case of the first cylindrical lens 124 aligned with the second cylindrical lens 126 in close proximity with each other along the propagation axis 132, the overall curvature of the first cylindrical lens 124 and the second cylindrical lens 126 is defined by the equation:

$$Z\ total(r, \theta) = Z_1\ (r, \theta_1) + Z_2(r, \theta_2) = 2 * A * r^2 * cos(\theta_1 - \theta_2) * cos^2(\theta - (\theta_1 + \theta_2)/2) + A * r^2 * (1 - cos(\theta_1 - \theta_2))$$

where it is assumed that the two cylindrical lenses have the same extended polynomial coefficient A. The second term of the above equation corresponds to the spherical optical element 128. The first term of the equation corresponds to the cylindrical lenses 124, 126, where the polynomial's coefficient is $2 * A * r^2 * cos(\theta_1 - \theta_2)$, and the rotating angle is $(\theta_1 + \theta_2)/2)$. From the first term, it can be seen how the two cylindrical lenses 124, 126 can contribute to tunable astigmatism correction. The rotation angle of the two cylindrical lenses 124, 126 is given by the mean value of the rotation angles of the two cylindrical lenses 124, 126. The astigmatism correction power is tuned by the difference of the rotation angles of the two cylindrical lenses 124, 126. As such, the astigmatism correction power is minimized when the two cylindrical lenses 124, 126 are rotated 90 degrees apart. Further, the astigmatism correction power is maximized when the two cylindrical lenses 124, 126 are rotated with the same angle. To further illustrate these examples, when the two cylindrical lenses 124, 126 have the same orientation where $(\theta_1 = \theta_2)$, then the max astigmatism correction is achieved by combining the total power of the two lenses, which is expressed by the equation:

$$Z\ total(r, \theta) = 2 * A * r^2 * cos2(\theta - \theta_1)$$

Further, when the cylindrical lenses 124, 126 are orientated orthogonally where $\theta 1 = \theta 2 + \pi/2$, then there is zero astigmatism correction, but a spherical correction, which is expressed by the equation:

$$Z\ total(r, \theta) = A * r^2$$

Overall, by rotating the two cylindrical lenses 124, 126, a total compensation power of between [0, 2P] can be achieved with a desired rotation angle between $[0, \pi]$. By rotating the two cylindrical lenses 124, 126, a total cylindrical power in between [abs(P1 - P2), (P1 + P2)] can be achieved at any angle.

Continuing with FIG. 1B, the vision correction module 122 comprises an adjustment mechanism 130 that is configured to change a rotational orientation of the first cylindrical lens 124 relative to the second cylindrical lens 126 about the propagation axis 132 to direct the image light 116 to a designated location in the eye 118 of the user 110 to correct for astigmatism as discussed above. Furthermore, the adjustment mechanism 130 is configured to adjust a state of the spherical optical element 128 to cause the spherical optical element to adjust a focal point of the image light 116 to the

designated location in the eye 118 of the user 110 to correct for myopia and/or presbyopia.

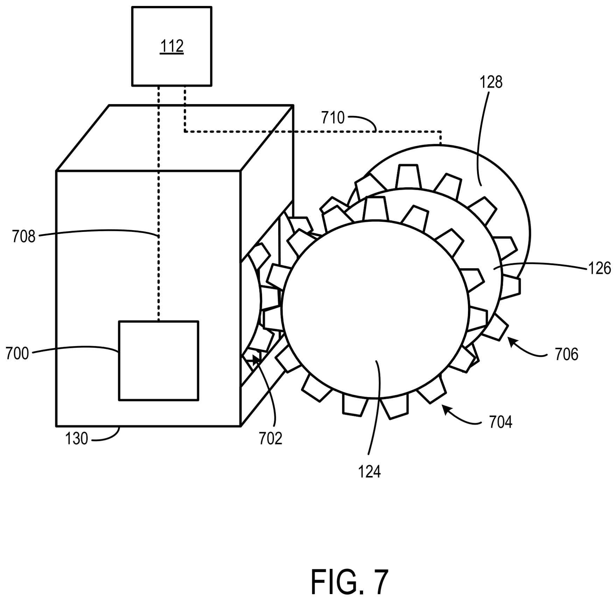

FIG. 7 schematically shows the adjustment mechanism 130, according to one example of the present disclosure. The adjustment mechanism 130 comprises a motor 700 that is connected to a gear train 702. The gear train 702 is configured to interface with corresponding gears 704 on the first cylindrical lens 124 and corresponding gears 706 on the second cylindrical lens 126. The adjustment mechanism 130 is connected to the computing system 112. The computing system 112 is configured to send control signals 708 to the motor 700 to control the gear train 702 to rotate the corresponding gears 704 of the first cylindrical lens 124 to rotate the first cylindrical lens 124 by a first rotation angle. Further, the computing system 112 is configured to send control signals 708 to the motor 700 to control the gear train 702 to rotate the corresponding gears 706 of the second cylindrical lens 126 to rotate the second cylindrical lens 126 by a second rotation angle. The first rotation angle of the first cylindrical lens 124 and the second rotation angle of the second cylindrical lens 126 achieve a rotational orientation about the propagation axis 132 to direct the image light 116 to a designated location in the eye 118 of the user 110.

Furthermore, the computing system 112 is configured to send control signals 710 to the adjustment mechanism 130 to adjust the state of the spherical optical element 128 to cause the spherical optical element 128/ to adjust a focal point of the image light 116 to the designated location in the eye 118 of the user 110. In one example, the control signal 710 is a voltage that is applied to the spherical optical element 128 to change the state of the spherical optical element 128 (e.g., in the case of a liquid lens, liquid crystal lens, or a geometric phase lens). In another example, the control signal 710 adjusts a motor or actuator that changes the state of the spherical optical element 128 (e.g., in the case of an Alvarez lens).

Returning to FIG. 1B, the computing system 112 comprises one or more processors 134 and memory 136 holding instructions that are executable by the processor(s) 134 to perform computing operations to control the VR HMD 100. The computing system 112 further comprises an input subsystem 138 that is configured to translate user input (e.g., pressing keys, moving a mouse, touching a touch-sensitive display) into signals that affect control of the VR HMD 100. In some examples, the memory 136 holds instructions executable by the processor(s) 134 to receive, via the input subsystem 138 a corrective prescription 140 for the eye 118 of the user 110. The corrective prescription 140 includes a sphere parameter value 142, a cylinder parameter value 144, and an axis parameter value 146. The memory 136 further holds instructions executable by the processor(s) 134 to rotate, via the adjustment mechanism 130, the first cylindrical lens 124 about the propagation axis 132 by a first rotation angle ($\theta_1$ shown in FIG. 3) and rotate the second cylindrical lens 126 about the propagation axis 132 by a second rotation angle ($\theta_2$ shown in FIG. 3) based at least on the cylinder parameter value 144 and the axis parameter value 146. The memory 136 further holds instructions executable by the processor(s) 134 to adjust, via the adjustment mechanism 130, the state of the spherical optical element 128 based at least on the sphere parameter value 142. In this way, the vision correction module 122 can modify the image light 116 to correct for the specific vision deficiencies of the eye 118 of the user 110 such that an image displayed by the VR HMD 100 does not appear blurry or distorted.

In the illustrated example, the HMD 100 is a virtual-reality device (e.g., VR HMD) in which the user 110 views an opaque display that is not see-through. Such an arrangement allows for the components of the display subsystem 104 to be aligned along the propagation axis 132. In particular, the image source 114, the display optics 120, and the vision correction module 122 are aligned along the propagation axis 132. Such an arrangement may have a small form factor that provides comfort to the user 110 when wearing the VR HMD 100.

Further note that in the illustrated example, the display subsystem 104 displays image content to one eye of the user 110. The VR HMD 100 may include a second display subsystem and/or a second vision correction module that is configured in the same manner as the display subsystem 104 and/or the vision correction module 122. In some examples, the memory 136 hold instructions executable by the processor(s) 134 to receive, via the input subsystem 138, a second corrective prescription for the second eye of the user 110 that is different than the first corrective prescription 140 and adjust a state of the second vision correction module based at least on the second corrective prescription. In this way, when a user has different vision deficiencies in different eyes, the VR HMD 100 can be tuned to correct for the individual vision deficiencies of the individual eyes of the user.

Although the vision correction techniques of the present disclosure have been discussed in the context of a VR HMD, the vision correction techniques are also broadly applicable to augmented reality and mixed reality implementations.

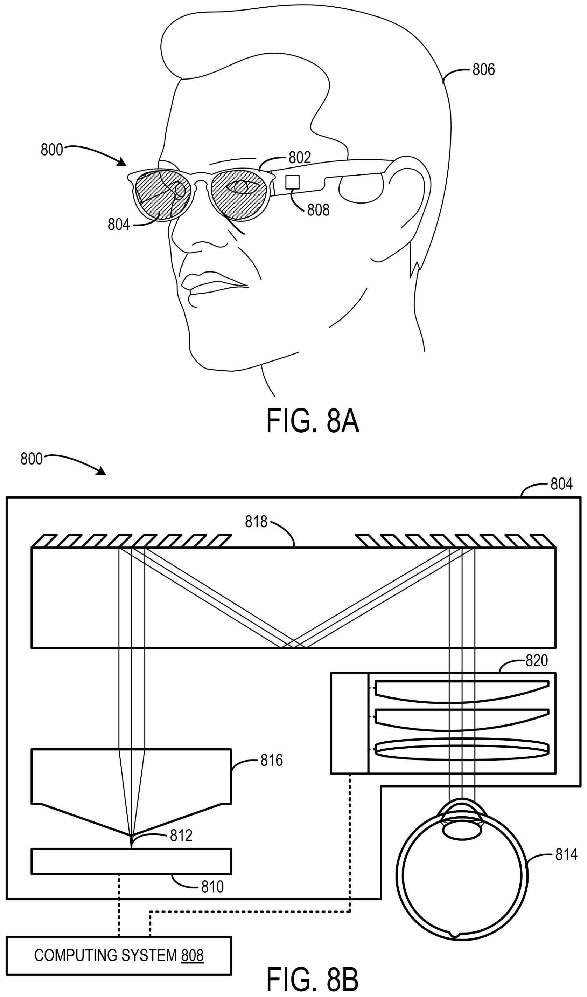

FIG. 8A shows an augmented reality (AR) HMD 800 capable of providing adjustable vision correction, according to one example of the present disclosure. The AR HMD 800 comprises a frame 802 and a see-through display subsystem 804 that is operatively connected to the frame 802. The frame 802 is configured to position the see-through display subsystem 804 in a field of view of eyes of a user 806, such that the see-through display subsystem 804 can display augmented-reality content to the eyes of the user 806. The AR HMD 800 comprises a computing system 808 that is configured to control the see-through display subsystem 804 to provide vision correction that is adjustable to compensate for the particular vision deficiencies of the eyes of the user 806. In particular, the see-through display subsystem 804 is configured to generate image light corresponding to augmented-reality content and manipulate the image light to focus on retinas in the eyes of the user 806 in a manner that corrects for vision deficiencies of the eyes of the user 806.

FIG. 8B schematically shows the AR HMD 800 shown in FIG. 8A, and more particularly, the see-through display

subsystem 804. The see-through display subsystem 804 comprises an image source 810 that is configured to generate image light 812 that forms an image / video that is delivered by the see-through display subsystem 804 to an eye 814 of the user 806. The see-through display subsystem 804 comprises display optics 816 that are configured to direct the image light 812 into a waveguide 818. The image light 812 travels through the waveguide 818 via total internal reflection and is output toward the eye 814 of the user 806. The see-through display subsystem 804 includes a vision correction module 820 that is positioned intermediate the waveguide 818 and the eye 814 of the user 806. The vision correction module 820 functions in the same or similar manner as the vision correction module 122 shown in FIG. 1B. In this way, the vision correction module 820 can correct vision deficiencies of the eye 814 of the user 806, so that the user can view augmented-reality content via the see-through display subsystem 804 without being blurred or otherwise distorted. The AR HMD 800 can include a second see-through display subsystem and/or a second vision correction module that is configured in the same manner as the see-through display subsystem 804 and/or the vision correction module 820 in order to correct different vision deficiencies of individual eyes of the user 806.

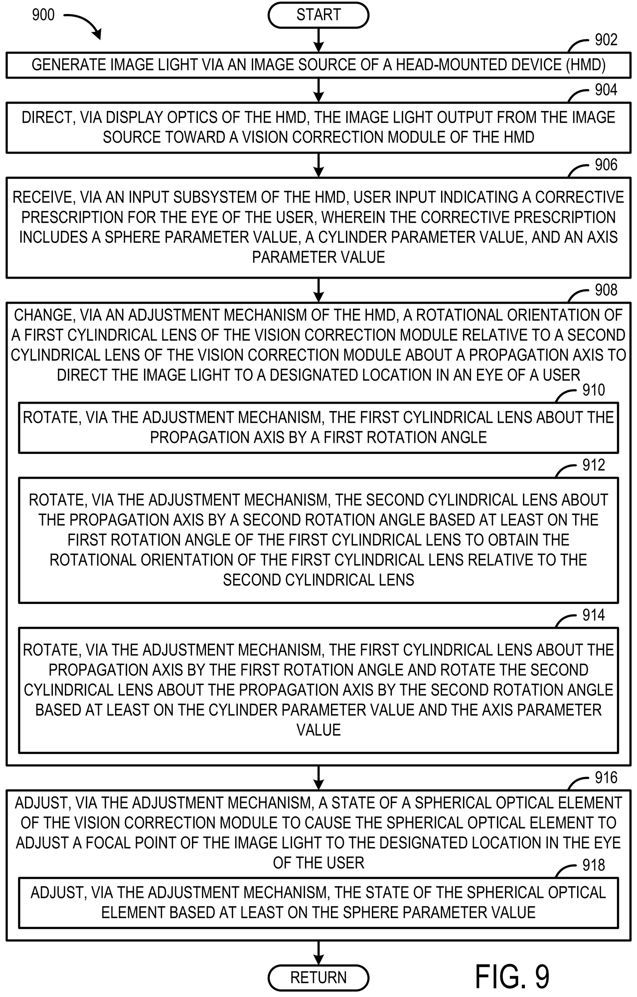

FIG. 9 shows an example method 900 for controlling an HMD to provide adjustable vision correction for a user, according to one example of the present disclosure. For example, the method 900 can be performed by the VR HMD 100 shown in FIGS. 1A and 1B, the AR HMD 800 shown in FIGS. 8A and 8B, or another type of device.

At 902, the method 900 includes generating image light via an image source of a head-mounted device (HMD). At 904, the method 900 includes directing, via display optics of the HMD, the image light output from the image source toward a vision correction module of the HMD. In some implementations, at 906, the method 900 includes receiving, via an input subsystem of the HMD, user input indicating a corrective prescription for the eye of the user, wherein the corrective prescription includes a sphere parameter value, a cylinder parameter value, and an axis parameter value. At 908, the method 900 includes changing, via an adjustment mechanism of the HMD, a rotational orientation of the first cylindrical lens relative to the second cylindrical lens about the propagation axis to direct the image light to a designated location in the eye of the user. In one example, the designated location in the eye of the user may correspond to a retina in the eye of the user. In some implementations, at 910, the method 900 may include rotating, via the adjustment mechanism, the first cylindrical lens about the propagation axis by a first rotation angle, and, at 912, the method 900 may include rotating, via the adjustment mechanism, the second cylindrical lens about the propagation axis by a second rotation angle based at least on the first rotation angle of the first cylindrical lens to direct the image light to obtain the rotational orientation of the first cylindrical lens relative to the second cylindrical lens. In some implementations, at 914, the method 900 may include rotating, via the adjustment mechanism, the first cylindrical lens about the propagation axis by the first rotation angle and rotate the second cylindrical lens about the propagation axis by the second rotation angle based at least on the cylinder parameter value and the axis parameter value of the corrective prescription. In some implementations, at 916, the method 900 may include adjusting, via the adjustment mechanism, a state of the spherical optical element to cause the spherical optical element to adjust a focal point of the image light to the designated location in the eye of the user. In some implementations, at 918, the method 900 may include adjusting, via the adjustment mechanism, the state of the spherical optical element based at least on the sphere parameter value of the corrective prescription.

Note that the method 900 can be performed by multiple display subsystems and/or vision correction modules of an HMD to correct for individual vision deficiencies in different eyes of a user.

The method 900 can be performed to tune an HMD to correct for astigmatism, myopia, presbyopia, or other vision deficiencies of a particular user. By making the HMD tunable in this manner, a user with specific vision deficiencies can view virtual-reality, augmented-reality, mixed-reality content without blurring or other distortions while not having to wear corrective glasses or contact lenses while using the HMD. Such features and functionality make the HMD more inclusive, accessible, and comfortable for a broader range of users, especially those with vision deficiencies.

In some implementations, the methods and processes described herein may be tied to a computing system of one or more computing devices. In particular, such methods and processes may be implemented as a computer-application program or service, an application-programming interface (API), a library, and/or other computer-program product.

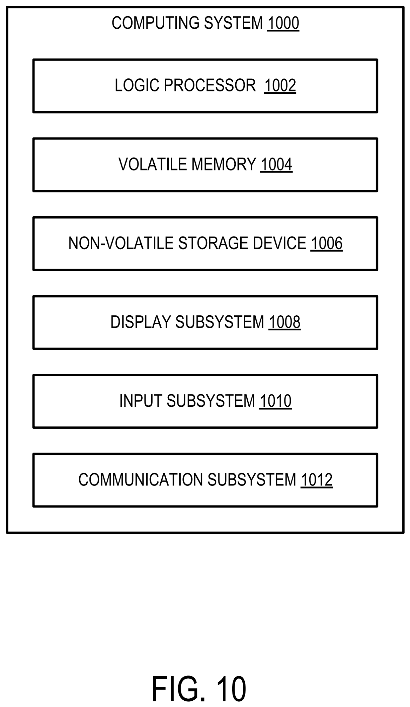

FIG. 10 schematically shows a non-limiting implementation of a computing system 1300 that can enact one or more of the methods and processes described above. Computing system 1300 is shown in simplified form. Computing system 1300 may embody the VR HMD 100 shown in FIGS. 1A and 1B and the AR HMD 800 shown in FIGS. 8A and 8B. Computing system 1300 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 1300 includes a logic processor 1302 volatile memory 1304, and a non-volatile storage device 1306. Computing system 1300 may optionally include a display subsystem 1308, input subsystem 1310, communication subsystem 1312, and/or other components not shown in FIG. 13.

Logic processor 1302 includes one or more physical devices configured to execute instructions. For example, the logic processor may be configured to execute instructions that are part of one or more applications, programs, routines,

libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 1302 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 1306 includes one or more physical devices configured to hold instructions executable by the logic processors to implement the methods and processes described herein. When such methods and processes are implemented, the state of non-volatile storage device 1306 may be transformed-e.g., to hold different data.

Non-volatile storage device 1306 may include physical devices that are removable and/or built-in. Non-volatile storage device 1306 may include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 1306 may include nonvolatile, dynamic, static, read/write, read-only, sequential-access, location-addressable, file-addressable, and/or content-addressable devices. It will be appreciated that non-volatile storage device 1306 is configured to hold instructions even when power is cut to the non-volatile storage device 1306.

Volatile memory 1304 may include physical devices that include random access memory. Volatile memory 1304 is typically utilized by logic processor 1302 to temporarily store information during processing of software instructions. It will be appreciated that volatile memory 1304 typically does not continue to store instructions when power is cut to the volatile memory 1304.

Aspects of logic processor 1302, volatile memory 1304, and non-volatile storage device 1306 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 1300 typically implemented in software by a processor to perform a particular function using portions of volatile memory, which function involves transformative processing that specially configures the processor to perform the function. Thus, a module, program, or engine may be instantiated via logic processor 1302 executing instructions held by non-volatile storage device 1306, using portions of volatile memory 1304. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 1308 may be used to present a visual representation of data held by non-volatile storage device 1306. The visual representation may take the form of a graphical user interface (GUI). As the herein described methods and processes change the data held by the non-volatile storage device, and thus transform the state of the non-volatile storage device, the state of display subsystem 1308 may likewise be transformed to visually represent changes in the underlying data. Display subsystem 1308 may include one or more display devices utilizing virtually any type of technology. Such display devices may be combined with logic processor 1302, volatile memory 1304, and/or non-volatile storage device 1306 in a shared enclosure, or such display devices may be peripheral display devices.

When included, input subsystem 1310 may comprise or interface with one or more user-input devices such as a keyboard, mouse, touch screen, or game controller. In some implementations, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; and/or another suitable sensor.

When included, communication subsystem 1312 may be configured to communicatively couple various computing devices described herein with each other, and with other devices. Communication subsystem 1312 may include wired and/or wireless communication devices compatible with one or more different communication protocols. As

non-limiting examples, the communication subsystem may be configured for communication via a wireless telephone network, or a wired or wireless local- or wide-area network, such as a HDMI over Wi-Fi connection. In some implementations, the communication subsystem may allow computing system 1300 to send and/or receive messages to and/or from other devices via a network such as the Internet.

The following paragraphs provide additional description of the subject matter of the present disclosure.

In an example, a head-mounted device comprises an image source configured to generate image light, display optics configured to receive the image light output from the image source and direct the image light toward an eye of a user, and a vision correction module positioned intermediate the display optics and the eye of the user, wherein the vision correction module is configured to receive the image light output from display optics, wherein the vision correction module comprises a first cylindrical lens, a second cylindrical lens aligned with the first cylindrical lens along a propagation axis, and an adjustment mechanism configured to change a rotational orientation of the first cylindrical lens relative to the second cylindrical lens about the propagation axis to direct the image light to a designated location in the eye of the user. In this example and/or other examples, the adjustment mechanism may be configured to rotate the first cylindrical lens about the propagation axis by a first rotation angle and rotate the second cylindrical lens relative about the propagation axis by a second rotation angle based at least on the first rotation angle of the first cylindrical lens to obtain the rotational orientation of the first cylindrical lens relative to the second cylindrical lens. In this example and/or other examples, the vision correction module may further comprise a spherical optical element aligned with the first cylindrical lens and the second cylindrical lens along the propagation axis, and the adjustment mechanism may be configured to adjust a state of the spherical optical element to cause the spherical optical element to adjust a focal point of the image light to the designated location in the eye of the user. In this example and/or other examples, the spherical optical element may comprise a liquid lens. In this example and/or other examples, the spherical optical element may comprise at least one of a liquid crystal lens and a geometric phase lens. In this example and/or other examples, the spherical optical element may comprise an Alvarez lens. In this example and/or other examples, the head-mounted device may further comprise one or more processors and memory holding instructions executable by the one or more processors to receive, via an input subsystem of the head-mounted device, a corrective prescription for the eye of the user, wherein the corrective prescription includes a sphere parameter value, a cylinder parameter value, and an axis parameter value, and rotate, via the adjustment mechanism, the first cylindrical lens about the propagation axis by a first rotation angle and rotate the second cylindrical lens about the propagation axis by a second rotation angle based at least on the cylinder parameter value and the axis parameter value, and adjust, via the adjustment mechanism, the state of the spherical optical element based at least on the sphere parameter value. In this example and/or other examples, the vision correction module may be a first vision correction module, the eye of the user may be a first eye of the user, the corrective prescription may be a first corrective prescription, and the head-mounted device may further comprise a second vision correction module positioned intermediate the display optics and a second eye of the user, and the one or more processors and memory may hold instructions executable by the one or more processors to receive, via the input subsystem, a second corrective prescription for the second eye of the user that is different than the first corrective prescription, and adjust a state of the second vision correction module based at least on the second corrective prescription. In this example and/or other examples, the spherical optical element may be coupled to either of the first cylindrical lens or the second cylindrical lens. In this example and/or other examples, the adjustment mechanism may comprise a motor and a gear train that is configured to interface with corresponding gears on the first cylindrical lens and corresponding gears on the second cylindrical lens. In this example and/or other examples, the head-mounted device may be an augmented-reality device, and the display optics comprise a see-through display. In this example and/or other examples, the head-mounted device may be a virtual-reality device, and the image source, the display optics, and the vision correction module may be aligned along the propagation axis.

In another example, a method for controlling a head-mounted device to provide vision correction for a user, wherein the head-mounted device comprises a vision correction module comprising a first cylindrical lens, a second cylindrical lens aligned with the first cylindrical lens along a propagation axis, and an adjustment mechanism, the method comprises generating image light via an image source of the head-mounted device, directing, via display optics of the head-mounted device, the image light output from the image source toward the vision correction module, and changing, via the adjustment mechanism, a rotational orientation of the first cylindrical lens relative to the second cylindrical lens about the propagation axis to direct the image light to a designated location in the eye of the user. In this example and/or other examples, the method may further comprise rotating, via the adjustment mechanism, the first cylindrical lens about the propagation axis by a first rotation angle, and rotating, via the adjustment mechanism, the second cylindrical lens about the propagation axis based at least on the first rotation angle of the first cylindrical lens to obtain the rotational orientation of the first cylindrical lens relative to the second cylindrical lens. In this example and/or other examples, the vision correction module may further comprise a spherical optical element aligned with the first cylindrical lens and the second cylindrical lens along the propagation axis, and the method may further comprise adjusting, via the adjustment mechanism, a state of the spherical optical element to cause the spherical optical element to adjust a focal point of the image light to the designated location in the eye of the user. In this example and/or other examples, the spherical optical element may

comprise at least one of a liquid lens, a liquid crystal lens, a geometric phase lens, or an Alvarez lens. In this example and/or other examples, the method may further comprises receiving, via an input subsystem of the head-mounted device, a corrective prescription for the eye of the user, wherein the corrective prescription includes a sphere parameter value, a cylinder parameter value, and an axis parameter value, rotating, via the adjustment mechanism, the first cylindrical lens about the propagation axis by a first rotation angle and rotating the second cylindrical lens about the propagation axis by a second rotation angle based at least on the cylinder parameter value and the axis parameter value, and adjusting, via the adjustment mechanism, the state of the spherical optical element based at least on the sphere parameter value.

In yet another example, a head-mounted device comprises an image source configured to generate image light, display optics configured to receive the image light output from the image source and direct the image light toward an eye of a user, and a vision correction module positioned intermediate the display optics and the eye of the user, wherein the vision correction module is configured to receive the image light output from display optics, wherein the vision correction module comprises a first cylindrical lens, a second cylindrical lens aligned with the first cylindrical lens along a propagation axis, a spherical optical element aligned with the first cylindrical lens and the second cylindrical lens along the propagation axis, and an adjustment mechanism configured to rotate the first cylindrical lens about the propagation axis by a first rotation angle and rotate the second cylindrical lens about the propagation axis by a second rotation angle based at least on the first angle of the first cylindrical lens to direct the image light to a designated location in the eye of the user, and adjust a state of the spherical optical element to cause the spherical optical element to adjust a focal point of the image light to the designated location in the eye of the user. In this example and/or other examples, the head-mounted device may further comprise one or more processors and memory holding instructions executable by the one or more processors to receive, via an input subsystem of the head-mounted device, a corrective prescription for the eye of the user, wherein the corrective prescription includes a sphere parameter value, a cylinder parameter value, and an axis parameter value, and wherein the adjustment mechanism rotates the first cylindrical lens about the propagation axis by the first rotation angle and rotates the second cylindrical lens about the propagation axis by the second rotation angle based at least on the cylinder parameter value and the axis parameter value; and wherein the adjustment mechanism adjusts the state of the spherical optical element based at least on the sphere parameter value. In this example and/or other examples, the vision correction module may be a first vision correction module, the eye of the user may be a first eye of the user, the corrective prescription may be a first corrective prescription, and the head-mounted device may further comprise a second vision correction module positioned intermediate the display optics and a second eye of the user, and the one or more processors and memory may hold instructions executable by the one or more processors to receive, via the input subsystem, a second corrective prescription for the second eye of the user that is different than the first corrective prescription, and adjust a state of the second vision correction module based at least on the second corrective prescription.

It will be understood that the configurations and/or approaches described herein are exemplary in nature, and that these specific implementations or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

**1.** A head-mounted device (100), comprising:

an image source (114) configured to generate image light;
display optics (120) configured to receive the image light output from the image source (114) and direct the image light toward an eye (118) of a user; and
a vision correction module (122) positioned intermediate the display optics (120) and the eye (118) of the user, wherein the vision correction module (122) is configured to receive the image light output from display optics (120), wherein the vision correction module (122) comprises:

a first cylindrical lens (124),
a second cylindrical lens (126) aligned with the first cylindrical lens (124) along a propagation axis, and
an adjustment mechanism (130) configured to change a rotational orientation of the first cylindrical lens (124) relative to the second cylindrical lens (126) about the propagation axis to direct the image light to a designated location in the eye (118) of the user.

2. The head-mounted device (100) of claim 1, wherein the adjustment mechanism is configured to rotate the first cylindrical lens about the propagation axis by a first rotation angle and rotate the second cylindrical lens relative about the propagation axis by a second rotation angle based at least on the first rotation angle of the first cylindrical lens to obtain the rotational orientation of the first cylindrical lens relative to the second cylindrical lens.

3. The head-mounted device (100) of claim 1, wherein the vision correction module further comprises a spherical optical element aligned with the first cylindrical lens and the second cylindrical lens along the propagation axis, and wherein the adjustment mechanism is configured to adjust a state of the spherical optical element to cause the spherical optical element to adjust a focal point of the image light to the designated location in the eye of the user.

4. The head-mounted device (100) of claim 3, wherein the spherical optical element comprises a liquid lens.

5. The head-mounted device (100) of claim 3, wherein the spherical optical element comprises at least one of a liquid crystal lens and a geometric phase lens.

6. The head-mounted device (100) of claim 3, wherein the spherical optical element comprises an Alvarez lens.

7. The head-mounted device (100) of claim 3, further comprising:
one or more processors and memory holding instructions executable by the one or more processors to:

receive, via an input subsystem of the head-mounted device, a corrective prescription for the eye of the user, wherein the corrective prescription includes a sphere parameter value, a cylinder parameter value, and an axis parameter value; and
rotate, via the adjustment mechanism, the first cylindrical lens about the propagation axis by a first rotation angle and rotate the second cylindrical lens about the propagation axis by a second rotation angle based at least on the cylinder parameter value and the axis parameter value; and
adjust, via the adjustment mechanism, the state of the spherical optical element based at least on the sphere parameter value.

8. The head-mounted device (100) of claim 7, wherein the vision correction module is a first vision correction module, wherein the eye of the user is a first eye of the user, wherein the corrective prescription is a first corrective prescription, and wherein the head-mounted device further comprises:

a second vision correction module positioned intermediate the display optics and a second eye of the user; and
wherein the one or more processors and memory hold instructions executable by the one or more processors to:

receive, via the input subsystem, a second corrective prescription for the second eye of the user that is different than the first corrective prescription; and
adjust a state of the second vision correction module based at least on the second corrective prescription.

9. The head-mounted device (100) of claim 1, wherein the spherical optical element is coupled to either of the first cylindrical lens or the second cylindrical lens.

10. The head-mounted device (100) of claim 1, wherein the adjustment mechanism comprises a motor and a gear train that is configured to interface with corresponding gears on the first cylindrical lens and corresponding gears on the second cylindrical lens.

11. The head-mounted device (100) of claim 1, wherein the head-mounted device is an augmented-reality device, and the display optics comprise a see-through display, or
wherein the head-mounted device is a virtual-reality device, and wherein the image source, the display optics, and the vision correction module are aligned along the propagation axis.

12. A method (900) for controlling a head-mounted device to provide vision correction for a user, wherein the head-mounted device comprises a vision correction module comprising a first cylindrical lens, a second cylindrical lens aligned with the first cylindrical lens along a propagation axis, and an adjustment mechanism, the method comprising:

generating (902) image light via an image source of the head-mounted device;
directing (904), via display optics of the head-mounted device, the image light output from the image source

toward the vision correction module; and
changing (908), via the adjustment mechanism, a rotational orientation of the first cylindrical lens relative to the second cylindrical lens about the propagation axis to direct the image light to a designated location in the eye of the user.

**13.** A head-mounted device (100), comprising:

an image source (114) configured to generate image light;
display optics (120) configured to receive the image light output from the image source (114) and direct the image light toward an eye (118) of a user; and
a vision correction module (122) positioned intermediate the display optics (120) and the eye (118) of the user, wherein the vision correction module (122) is configured to receive the image light output from display optics (120), wherein the vision correction module (122) comprises:

a first cylindrical lens (124),
a second cylindrical lens (126) aligned with the first cylindrical lens (124) along a propagation axis,
a spherical optical element (128) aligned with the first cylindrical lens (124) and the second cylindrical lens (126) along the propagation axis; and
an adjustment mechanism (130) configured to rotate the first cylindrical lens (124) about the propagation axis by a first rotation angle and rotate the second cylindrical lens (126) about the propagation axis by a second rotation angle based at least on the first angle of the first cylindrical lens (124) to direct the image light to a designated location in the eye (118) of the user, and adjust a state of the spherical optical element (128) to cause the spherical optical element (128) to adjust a focal point of the image light to the designated location in the eye (118) of the user.

**14.** The head-mounted device (100) of claim 13, further comprising:
one or more processors and memory holding instructions executable by the one or more processors to:

receive, via an input subsystem of the head-mounted device, a corrective prescription for the eye of the user, wherein the corrective prescription includes a sphere parameter value, a cylinder parameter value, and an axis parameter value; and
wherein the adjustment mechanism rotates the first cylindrical lens about the propagation axis by the first rotation angle and rotates the second cylindrical lens about the propagation axis by the second rotation angle based at least on the cylinder parameter value and the axis parameter value; and wherein the adjustment mechanism adjusts the state of the spherical optical element based at least on the sphere parameter value.

**15.** The head-mounted device (100) of claim 13, wherein the vision correction module is a first vision correction module, wherein the eye of the user is a first eye of the user, wherein the corrective prescription is a first corrective prescription, and wherein the head-mounted device further comprises:

a second vision correction module positioned intermediate the display optics and a second eye of the user; and
wherein the one or more processors and memory hold instructions executable by the one or more processors to:

receive, via the input subsystem, a second corrective prescription for the second eye of the user that is different than the first corrective prescription; and
adjust a state of the second vision correction module based at least on the second corrective prescription.

108
102
106
100
112
104
110

FIG. 1A

COMPUTING SYSTEM 112
PROCESSOR(S) 134
MEMORY 136
INPUT SUBSYSTEM 138
CORRECTIVE PRESCRIPTION 140
SPHERE PARAMETER VALUE 142
CYLINDER PARAMETER VALUE 144
AXIS PARAMETER VALUE 146
104
114
116
120
122
130
124
126
128
100
118
132

FIG. 1B

Y
X
R1
R2
132

FIG. 2

Y
X
R1
R2
132
$\theta_1$
$\theta_2$

FIG. 3

408
410
400
116
132
116
402
404
406
116
500
132
116
502
506
504
600
604
116
132
116
602

FIG. 4

FIG. 5

FIG. 6

112
128
710
708
126
700
706
704
130
702
124

FIG. 7

806
800
802
808
804

FIG. 8A

800
804
818
820
816
812
814
810
COMPUTING SYSTEM 808

FIG. 8B

900
START
902
GENERATE IMAGE LIGHT VIA AN IMAGE SOURCE OF A HEAD-MOUNTED DEVICE (HMD)
904
DIRECT, VIA DISPLAY OPTICS OF THE HMD, THE IMAGE LIGHT OUTPUT FROM THE IMAGE SOURCE TOWARD A VISION CORRECTION MODULE OF THE HMD
906
RECEIVE, VIA AN INPUT SUBSYSTEM OF THE HMD, USER INPUT INDICATING A CORRECTIVE PRESCRIPTION FOR THE EYE OF THE USER, WHEREIN THE CORRECTIVE PRESCRIPTION INCLUDES A SPHERE PARAMETER VALUE, A CYLINDER PARAMETER VALUE, AND AN AXIS PARAMETER VALUE
908
CHANGE, VIA AN ADJUSTMENT MECHANISM OF THE HMD, A ROTATIONAL ORIENTATION OF A FIRST CYLINDRICAL LENS OF THE VISION CORRECTION MODULE RELATIVE TO A SECOND CYLINDRICAL LENS OF THE VISION CORRECTION MODULE ABOUT A PROPAGATION AXIS TO DIRECT THE IMAGE LIGHT TO A DESIGNATED LOCATION IN AN EYE OF A USER
910
ROTATE, VIA THE ADJUSTMENT MECHANISM, THE FIRST CYLINDRICAL LENS ABOUT THE PROPAGATION AXIS BY A FIRST ROTATION ANGLE
912
ROTATE, VIA THE ADJUSTMENT MECHANISM, THE SECOND CYLINDRICAL LENS ABOUT THE PROPAGATION AXIS BY A SECOND ROTATION ANGLE BASED AT LEAST ON THE FIRST ROTATION ANGLE OF THE FIRST CYLINDRICAL LENS TO OBTAIN THE ROTATIONAL ORIENTATION OF THE FIRST CYLINDRICAL LENS RELATIVE TO THE SECOND CYLINDRICAL LENS
914
ROTATE, VIA THE ADJUSTMENT MECHANISM, THE FIRST CYLINDRICAL LENS ABOUT THE PROPAGATION AXIS BY THE FIRST ROTATION ANGLE AND ROTATE THE SECOND CYLINDRICAL LENS ABOUT THE PROPAGATION AXIS BY THE SECOND ROTATION ANGLE BASED AT LEAST ON THE CYLINDER PARAMETER VALUE AND THE AXIS PARAMETER VALUE
916
ADJUST, VIA THE ADJUSTMENT MECHANISM, A STATE OF A SPHERICAL OPTICAL ELEMENT OF THE VISION CORRECTION MODULE TO CAUSE THE SPHERICAL OPTICAL ELEMENT TO ADJUST A FOCAL POINT OF THE IMAGE LIGHT TO THE DESIGNATED LOCATION IN THE EYE OF THE USER
918
ADJUST, VIA THE ADJUSTMENT MECHANISM, THE STATE OF THE SPHERICAL OPTICAL ELEMENT BASED AT LEAST ON THE SPHERE PARAMETER VALUE
RETURN

FIG. 9

COMPUTING SYSTEM 1000

LOGIC PROCESSOR 1002

VOLATILE MEMORY 1004

NON-VOLATILE STORAGE DEVICE 1006

DISPLAY SUBSYSTEM 1008

INPUT SUBSYSTEM 1010

COMMUNICATION SUBSYSTEM 1012

FIG. 10

Europäisches
Patentamt
European
Patent Office
Office européen
des brevets

# EUROPEAN SEARCH REPORT

Application Number
EP 26 15 4982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2019/265514 A1 (RICHARDS EVAN M [US] ET AL) 29 August 2019 (2019-08-29)<br>* paragraphs [0029] - [0031], [0034], [0035], [0037]; figures 2-5 * | 1,2,9, 11,12<br>10 | INV.<br>G02B27/01<br><br>ADD.<br>G02B3/14<br>G02C7/08 |
| X<br>Y | US 2017/160798 A1 (LANMAN DOUGLAS ROBERT [US] ET AL) 8 June 2017 (2017-06-08)<br>* paragraphs [0037], [0064] - [0066]; figures 1,2,5,9a,9b * | 1-9, 11-15<br>10 | |
| X<br>Y | WO 2018/147811 A1 (LEMNIS TECH PTE LTD [SG]) 16 August 2018 (2018-08-16)<br>* paragraphs [0008], [0124], [0153], [0155], [0160] - [0166], [0168]; figures 5,7,8,18 * | 1,2,9, 11,12<br>10 | |
| Y | CN 114 616 505 A (VILLE BLACK GROUP) 10 June 2022 (2022-06-10)<br>* paragraphs [0038], [0043] * | 10 | |
| | | | TECHNICAL FIELDS SEARCHED (IPC) |
| | | | G02B<br>G02C |

The present search report has been drawn up for all claims

1

| Place of search | Date of completion of the search | Examiner |
|---|---|---|
| Munich | 17 June 2026 | Blau, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 26 15 4982

This annex lists the patent family members relating to the patent documents cited in the above-mentioned European search report. The members are as contained in the European Patent Office EDP file on
The European Patent Office is in no way liable for these particulars which are merely given for the purpose of information.

17-06-2026

| Patent document cited in search report | Publication date | Patent family member(s) | Publication date |
|---|---|---|---|
| US 2019265514 A1 | 29-08-2019 | CN 111771152 A | 13-10-2020 |
| | | EP 3759543 A1 | 06-01-2021 |
| | | US 10955688 B1 | 23-03-2021 |
| | | US 2019265514 A1 | 29-08-2019 |
| | | WO 2019168876 A1 | 06-09-2019 |
| US 2017160798 A1 | 08-06-2017 | NONE | |
| WO 2018147811 A1 | 16-08-2018 | EP 3580604 A1 | 18-12-2019 |
| | | SG 11201907370X A | 27-09-2019 |
| | | US 2020051320 A1 | 13-02-2020 |
| | | WO 2018147811 A1 | 16-08-2018 |
| CN 114616505 A | 10-06-2022 | CN 114616505 A | 10-06-2022 |
| | | EP 4055435 A1 | 14-09-2022 |
| | | JP 7601312 B2 | 17-12-2024 |
| | | JP 2022553629 A | 26-12-2022 |
| | | KR 20220093364 A | 05-07-2022 |
| | | US 2021132323 A1 | 06-05-2021 |
| | | WO 2021091975 A1 | 14-05-2021 |

EPO FORM P0459

For more details about this annex : see Official Journal of the European Patent Office, No. 12/82